Europäisches Patentamt

European Patent Office

Office européen des brevets

(19)

(11) **EP 1 724 375 A2**

(12) **EUROPEAN PATENT APPLICATION**

(43) Date of publication:
**22.11.2006 Bulletin 2006/47**

(51) Int Cl.:
*C23F 11/12* (2006.01)　　*C23F 11/10* (2006.01)

(21) Application number: **06009721.9**

(22) Date of filing: **11.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.05.2005　US 130702**

(71) Applicant: **BJ SERVICES COMPANY
Houston, TX 77092 (US)**

(72) Inventors:
• **Penna Adauto
CeP 227933 Macaé (BR)**
• **Arias Gino F. DiLullo
Barra da Tijuca,CEP 22630 Rio de Janeiro (BR)**
• **Rae Philip James
Landridge Condo, 118572 (SG)**

(74) Representative: **Stenger, Watzke & Ring
Kaiser-Friedrich-Ring 70
40547 Düsseldorf (DE)**

(54) **Corrosion inhibitor intensifier and method of using the same**

(57)　An aqueous organic acid composition containing a terpene as corrosion inhibitor intensifier is especially suitable for use in acidizing subterranean formations and wellbores. The composition substantially reduces the corrosive effects of the acidic solution on metals in contact with the acidic solution. Suitable terpenes include carotene, limonene, pinene, farnesene, camphor, cymene and menthol.

EP 1 724 375 A2

**Description**

**Field of the Invention**

The present invention relates to an aqueous acid composition containing a terpene and methods of using the composition to inhibit or reduce the corrosion of metals.

**Background of the Invention**

Some well stimulation techniques, such as pickling, acid washing, matrix acidizing and acid fracturing, require the use of corrosion inhibitors to reduce the rate of acid attack on metal components and to protect wellbore tubular goods. In some instances, such as in stimulation processes requiring strong acids, high temperatures, long duration jobs and/or special alloys, the cost of corrosion inhibitors may be so high that it becomes a significant portion of total costs. In such scenarios, corrosion inhibitor intensifiers, also known as corrosion inhibitor aids and corrosion inhibitor boosters, are included in the formulation in order to reduce costs and ensure that the stimulation job can be performed cost effectively while complying with technical requirements.

Commercial corrosion inhibitors are usually reaction mixtures or blends that contain at least one component selected from nitrogenous compounds, such as amines, acetylenic alcohols, mutual solvents and/or alcohols, surfactants, heavy oil derivatives and inorganic and/or organic metal salts. Such combinations are often required in order to make the corrosion inhibitor more effective. In addition, such combinations assist in dispersing the hydrophobic components and providing uniform corrosion inhibition of metal components.

Corrosion inhibitor intensifiers typically are less expensive than corrosion inhibitors and exhibit a synergistic effect with at least one of the components of the corrosion inhibitor, such as the nitrogenous compounds and/or acetylenic alcohol, to reduce the reaction rate of the acid with the tubular goods. Corrosion inhibitors, such as copper or iodide salts, have been reported to further function as corrosion inhibitor intensifiers at low concentrations.

However, synergistic effects are typically only evident when the corrosion inhibitor intensifier is used at relatively high concentrations. Corrosion inhibitor intensifiers further are often incompatible with certain corrosion inhibitors. Thus, the ability to formulate compositions at their requisite concentration levels is often compromised.

The most common commercial inhibitor intensifiers are formic acid, acetic acid and derivatives thereof, aldehydes and salts, and/or derivatives of arsenic, mercury, iodine, copper, antimony, and bismuth. Weak organic acids, like formic acid, have limited application since their low pH makes them more difficult to handle. Further, such acids are only useful at high concentrations. For instance, a typical volume ratio of corrosion inhibitor to corrosion inhibitor intensifier may be as high as 1:10. Further, formic acid has limited applicability because it is only useful as an inhibitor intensifier in mineral acid, such as HCl systems.

The use of salts, such as salts of arsenic and mercury, as inhibitor intensifiers has further been unsuccessful in light of their toxicity. Further, salts are not typically cost effective since they must be used at high concentrations and coupled with a chelating agent in order to avoid precipitation upon transformation into liquids. Less toxic salts, such as salts of antimony and bismuth, are either insoluble in water or have such limited solubility that they require the use of special solvents and/or processes to transform them into liquid additives. Such salts, when used in conjunction with HF-containing acid systems in sandstone acidizing, must be used at such high concentrations that unacceptable levels of precipitation occur. For instance, potassium iodide, a common inhibitor intensifier, requires concentrations ranging from 10 to 100 pounds per 1000 gallons of treating acid. As the concentration demands of the intensifier increase, the salt reacts with by-products formed from the reaction of HF and sand or clay to produce potassium fluosilicate, a low solubility reaction product.

A need exists therefore for a corrosion inhibitor intensifier which may be used at low concentrations and which is compatible with conventional corrosion inhibitors used in well stimulation.

**Summary of the Invention**

An acid composition, suitable for use in acidizing a subterranean formation or wellbore, contains, in addition to an aqueous organic acid solution and corrosion inhibitor, a corrosion inhibitor intensifier. The corrosion inhibitor intensifier contains a terpene. Such compositions substantially reduce the corrosive effects of the acidic solution on metals in contact with the acidic solution.

Suitable terpenes include hydrocarbons, alcohols, aldehydes and ketones which may be either monocyclic or bicyclic. Preferred terpenes include carotene, limonene, pinene, farnesene, camphor and menthol.

## Detailed Description of the Preferred Embodiments

Corrosive effects of metal may be dramatically reduced by use of a composition containing a mineral or organic acid, a corrosion inhibitor and a corrosion inhibitor intensifier; the corrosion inhibitor intensifier containing at least one terpene.

In well stimulation, for example, corrosion may be reduced by introducing the composition of the invention into the well. In addition to being environmentally friendly, the terpene corrosion inhibitor intensifier greatly reduces the need for conventional corrosion inhibitors, compared to the use of the corrosion inhibition intensifiers of the prior art.

The combination of terpene corrosion inhibitor intensifier and conventional corrosion inhibitors exhibits synergistic effects on acid inhibition. The combination is therefore particularly efficacious in the protection of metals. When used in acidizing, the corrosive effect of the acid solution on metal in contact with the solution is greatly minimized. When used in-situ, acid soluble materials may react with the composition to decrease the corrosive effect of the acid solution.

Suitable terpenes include monoterpenes, sesquiterpenes, diterpenes, triterpenes and tetraterpenes. Further included as "terpenes" are those essential oils from which monoterpenes, sesquiterpenes, diterpenes, triterpenes and tetraterpenes are extracted, such as citrus oil, pine or pinus oil, hemp oil, needle oil, tea tree oil, etc. Derivatives of terpenes, such as turpentines (including blends of natural terpenes and synthetic terpenes, dipentines and/or allocimenes (building blocks of terpene resins) and pyrodenes (breakdown products of terpenes), may further be employed.

Preferred terpenes include hydrocarbons, alcohols, aldehydes and ketones. The terpenes for use in the invention include those which are acyclic, monocyclic and bicyclic. Monocyclic and bicyclic terpenes are preferred. The cyclic terpenes may include those having one or more benzenoid groups.

Preferred terpenes include carotene, d-limonene, pinene, farnesene, camphor, cymene and menthol. Biodegradable monoterpenes, such as d-limonene and alpha-pinene are especially preferred.

The acid employed in the composition is preferably a mineral acid or an organic acid and mixtures thereof. Preferred mineral acids include hydrochloric acid, hydrofluoric acid, nitric acid, phosphoric acid and sulfuric acid.

Preferred organic acids include formic acid, acetic acid, glycolic acid, citric acid and phosphonic acid. In addition, the organic acid may be a chelating agent including aminopolycarboxylic acids and sodium, potassium and ammonium salts thereof. N-hydroxyethyl-N, N', N'-ethylenediaminetriacetic acid (HEDTA) and HEIDA (hydroxyethyliminodiacetic acid) are useful in the present process as free acids and their Na, K, $NH_4^+$ salts (and Ca salts). Other aminopolycarboxylic acid members, including EDTA, NTA (nitrilotriacetic acid), DTPA (diethylenetriaminepentaacetic acid), and CDTA (cyclohexylenediaminetetraacetic acid). Mixtures of such acids may further be employed.

When the acid is a mineral acid, the concentration of acid in the composition is in the range of from about 1 % to about 30% by weight of water in the composition, and more preferably from about 5% to about 28%.

When the acid is an organic acid, the concentration of acid in the composition is in the range of from about 1% to about 95% by weight of water in the composition, preferably from about 1% to about 15%.

The water utilized to form the composition may be any aqueous fluid which does not adversely react with other components of the composition. For example, the water may be fresh water, brackish water, brine as well as salt-containing water solutions such as sodium chloride, potassium chloride and ammonium chloride solutions.

The corrosion inhibition intensifier may be present in the composition of the invention is in an amount ranging from about 1 to about 10 % by volume of the composition. More preferably, the intensifier is present in an amount in the range of from about 1.5 to about 5 % by volume of the composition.

Suitable corrosion inhibitors are any of those conventionally used in the art. Such corrosion inhibitors reaction mixtures or blends containing at least one component selected from nitrogenous compounds, such as amines; acetylenic compounds, such as acetylenic alcohols; ketones, such as phenyl ketones; aldehydes, such as alpha, beta-unsaturated aldehydes including cinnamic aldehyde; phosphates; silicates; borates; zinc compounds; organic acids like aromatic carboxylic acids, like benzoic acid; phosphate esters; heterocyclic nitrogen and sulfur compounds, such as benzotriazole; and derivatives thereof. Such corrosion inhibitors include those set forth in U.S. Patent No. 5,543,388, herein incorporated by reference.

The corrosion inhibitor may further include one or more solvents, surfactants, mutual solvents, antisludge, sequestering agents, friction reducers and gelling agents and other conventional additives as well as mixtures thereof.

Suitable solvents include alkyl alcohols such as methyl alcohol, ethyl alcohol, propyl alcohol, isopropyl alcohol and butyl alcohol and alkylene glycols like ethylene glycol, propylene glycol.

One or more surfactants may also be utilized to facilitate the dispersion of the corrosion inhibitor and intensifier into the aqueous acid solution. Such surfactants include non-ionic surfactants, such as the 8 to 20 mole ethylene oxide adducts of octylphenol, nonylphenol and tridecylphenol. When used, the surfactant or surfactants preferably comprises less than about 20% by volume of the corrosion inhibitor.

The corrosion inhibitor is present in the composition in an amount in the range of from about 0.05% to about 5% by volume, more preferably from about 0.1% to about 3%. Typically, the volume ratio of corrosion inhibitor intensifier to corrosion inhibitor introduced into the well is from about 10:90 to about 90:10.

Since the composition dramatically reduces corrosion on metal, the composition can be used in a variety of industrial applications. The composition has particular applicability in well stimulation processes, such as, acidizing and fracture acidizing. Upon contact with the acid solution containing the corrosion inhibitor and terpene corrosion inhibitor intensifier, corrosion of metal surfaces is minimized. Such effects may be noted on all metallurgies, including carbon steel and special alloys. Further, the composition of the invention either does not react with by-products of the acid reaction or does not produce detrimental precipitates.

EXAMPLES

The following examples will illustrate the practice of the present invention in its preferred embodiments. Other embodiments within the scope of the claims herein will be apparent to one skilled in the art from consideration of the specification and practice of the invention as disclosed herein. It is intended that the specification, together with the example, be considered exemplary only, with the scope and spirit of the invention being indicated by the claims which follow.

In the Examples, the following abbreviations are employed:

CI-11 is a corrosion inhibitor containing alkylpyridinium quaternary, thiourea and oxyalkylated alkylphenols in isopropanol and water, commercially available from BJ Services Company.
CI-25 is a corrosion inhibitor containing a blend of quaternary salts, alcohols, formamide and ethoxylated nonylphenol, commercially available from BJ Services Company.
CI-14 and CI-30 are corrosion inhibitors, commercially available from BJ Services Company.

QA refers to a corrosion inhibitor of 100% active quaternary amine corrosion inhibitor, commercially available from Herga-Hib.

Antecor OG refers to a corrosion inhibitor composition containing a reaction of an alkyl quaternary amine and an acetylenic alcohol, commercially available from Poland.

GPT refers to gallons per thousand gallons acid.

The pitting scale used was as follows:

0    Zero (no staining or surface irregularities)
0-1   Slight staining of surface, but no surface irregularities
1    A trace amount of pitting on surface
Tr.   A trace, which is less than 1 but does exhibit a slight amount of surface irregularities (only the outer surface was affected)
2    A small amount of pitting on the surface
3    A medium amount of pitting on the surface
4    A large amount of pitting on the surface
5    Large holes or very deep pits anywhere on the test coupon

Examples 1-92.

Corrosion inhibitor formulations were prepared containing a corrosion inhibitor, a terpene and an acid solution, as set forth in Table I. Metal coupons where then soaked in these acids formulations at various temperatures. Corrosion was measured for a number of hours as indicated in the tables. Based on the weight loss of metal coupon, the corrosion rate was calculated by the following formula:

$$\text{Corrosion Rate} = [\text{Initial Metal Mass (gram)}] - [\text{Final metal mass (gram)}] \ / \ [\text{Metal area (square centimeter)}]$$

The results are compiled in Table I.

**Table I**

| Example No. | Corrosion Inhibitor | Inhibitor Intensifier | Inhibitor, GPT | Intensifier, GPT | Acid Type, Amount | Temp., °F | Test Times, Hours | Metal Type | Corrosion Rate |
|---|---|---|---|---|---|---|---|---|---|
| Comp. Ex. 1 | CI-11 | None | 4 | 0 | 15% HCl | 180 | 16 | N-80 | 0.0193 |
| 2 | CI-11 | Alpha Terpene | 2 | 2 | 15% HCl | 200 | 16 | N-80 | 0.0335 |
| | | | | | | | | | |
| Comp. Ex 3 | CI-14 | None | 4 | 0 | 15% HCl | 180 | 16 | N-80 | 0.0195 |
| 4 | CI-14 | Alpha Terpene | 2 | 2 | 15% HCl | 180 | 16 | N-80 | 0.0115 |
| Comp. Ex. 5 | CI-14 | Antimony Salt | 2 | 2 | 15% HCl | 180 | 16 | N-80 | 0.1572 |
| | | | | | | | | | |
| 6 | CI-14 | Alpha Terpene | 2 | 2 | 15% HCl | 200 | 16 | N-80 | 0.0449 |
| 7 | CI-14 | D'Limonene | 2 | 2 | 15% HCl | 200 | 16 | N-80 | 0.0344 |
| | | | | | | | | | |
| Comp. Ex. 8 | CI-14 | None | 4 | 0 | 28% HCl | 180 | 16 | N-80 | 0.1626 |
| 9 | CI-14 | Alpha Terpene | 2 | 2 | 28% HCl | 180 | 16 | N-80 | 0.3877 |
| | | | | | | | | | |
| Comp. Ex. 10 | CI-25 | None | 4 | 0 | 15% HCl | 180 | 16 | N-80 | 0.0006 |
| 11 | CI-25 | Alpha Terpene | 2 | 2 | 15% HCl | 180 | 16 | N-80 | 0.0007 |
| Comp. Ex. 12 | CI-25 | Antimony Salt | 2 | 2 | 15% HCl | 180 | 16 | N-80 | 0.0025 |
| | | | | | | | | | |
| Comp. Ex. 13 | CI-25 | Alpha Terpene | 2 | 2 | 15% HCl | 200 | 16 | N-80 | 0.0013 |
| 14 | CI-25 | D'Limonene | 2 | 2 | 15% HCl | 200 | 16 | N-80 | 0.0017 |
| Comp. Ex. 15 | CI-25 | Formic Acid | 2 | 2 | 15% HCl | 200 | 16 | N-80 | 0.0064 |
| Comp. Ex. 16 | CI-25 | EDTA + Copper + KI | 2 | 2 | 15% HCl | 200 | 16 | N-80 | 0.0181 |
| | | | | | | | | | |
| Comp. Ex. 17 | CI-25 | None | 4 | 0 | 28% HCl | 180 | 16 | N-80 | 0.0061 |

| Example No. | Corrosion Inhibitor | Inhibitor Intensifier | Inhibitor, GPT | Intensifier, GPT | Acid Type, Amount | Temp., °F | Test Times, Hours | Metal Type | Corrosion Rate |
|---|---|---|---|---|---|---|---|---|---|
| 18 | CI-25 | Alpha Terpene | 2 | 2 | 28% HCl | 180 | 16 | N-80 | 0.0029 |
| | | | | | | | | | |
| Comp. Ex. 19 | Poland | None | 4 | 0 | 15% HCl | 180 | 16 | N-80 | 0.0004 |
| 20 | Poland | Alpha Terpene | 2 | 2 | 15% HCl | 180 | 16 | N-80 | 0.0014 |
| | | | | | | | | | |
| Comp. Ex. 21 | QA | None | 4 | 0 | 15% HCl | 180 | 16 | N-80 | 0.0330 |
| 22 | QA | Alpha Terpene | 2 | 2 | 15% HCl | 180 | 16 | N-80 | 0.0167 |
| | | | | | | | | | |
| 23 | Poland | Alpha Terpene | 2 | 2 | 15% HCl | 180 | 16 | N-80 | 0.0011 |
| 24 | CI-30 | Alpha Terpene | 2 | 2 | 15% HCl | 180 | 16 | N-80 | 0.0014 |
| 25 | CI-30 | Alpha Terpene | 2 | 2 | 15% HCl | 200 | 16 | N-80 | 0.0109 |
| | | | | | | | | | |
| Comp. Ex. 26 | CI-25 | None | 4 | 0 | 28% HCl | 180 | 16 | Chrome 13 | 0.1264 |
| 27 | CI-25 | Alpha Terpene | 2 | 2 | 28% HCl | 180 | 16 | Chrome 13 | 0.1358 |
| Comp. Ex. 28 | CI-14 | None | 4 | 0 | 28% HCl | 180 | 16 | Chrome 13 | 0.4116 |
| 29 | CI-14 | Alpha Terpene | 2 | 2 | 28% HCl | 180 | 16 | Chrome 13 | 0.6945 |
| | | | | | | | | | |
| Comp. Ex. 30 | CI-11 | None | 4 | 0 | 15% HCl | 180 | 16 | CTU | 0.0193 |
| 31 | CI-11 | Alpha Terpene | 2 | 2 | 15% HCl | 180 | 16 | CTU | 0.0099 |
| 32 | CI-11 | Alpha Terpene | 2 | 2 | 15% HCl | 200 | 16 | CTU | 0.0159 |
| | | | | | | | | | |
| Comp. Ex 33 | CI-14 | None | 4 | 0 | 15% HCl | 180 | 16 | CTU | 0.0036 |
| 34 | CI-14 | Alpha Terpene | 2 | 2 | 15% HCl | 180 | 16 | CTU | 0.0036 |
| Comp. Ex. 35 | CI-14 | Antimony Salt | 2 | 2 | 15% HCl | 180 | 16 | CTU | 0.0029 |

(continued)

| Example No. | Corrosion Inhibitor | Inhibitor Intensifier | Inhibitor, GPT | Intensifier, GPT | Acid Type, Amount | Temp., °F | Test Times, Hours | Metal Type | Corrosion Rate |
|---|---|---|---|---|---|---|---|---|---|
| | | | | | | | | | |
| 36 | CI-14 | Alpha Terpene | 2 | 2 | 15% HCl | 200 | 16 | CTU | 0.0022 |
| 37 | CI-14 | D'Limonene | 2 | 2 | 15% HCl | 200 | 16 | CTU | 0.0053 |
| Comp. Ex. 38 | CI-14 | EDTA + Copper + KI | 2 | 2 | 15% HCl | 200 | 16 | CTU | 0.0046 |
| 39 | CI-14 | Formic Acid | 2 | 2 | 15% HCl | 200 | 16 | CTU | 0.0036 |
| | | | | | | | | | |
| Comp. Ex 40 | CI-25 | None | 4 | 0 | 15% HCl | 180 | 16 | CTU | 0.0026 |
| 41 | CI-25 | Alpha Terpene | 2 | 2 | 15% HCl | 180 | 16 | CTU | 0.0007 |
| 42 | CI-25 | Formic Acid | 2 | 2 | 15% HCl | 180 | 16 | CTU | 0.0002 |
| | | | | | | | | | |
| 43 | CI-25 | Alpha Terpene | 2 | 2 | 15% HCl | 200 | 16 | CTU | 0.0009 |
| 44 | CI-25 | D'Limonene | 2 | 2 | 15% HCl | 200 | 16 | CTU | 0.0038 |
| 45 | CI-25 | EDTA + Copper + KI | 2 | 2 | 15% HCl | 200 | 16 | CTU | 0.0106 |
| 46 | CI-25 | Formic Acid | 2 | 2 | 15% HCl | 200 | 16 | CTU | 0.0095 |
| | | | | | | | | | |
| Comp. Ex. 47 | CI-30 | None | 4 | 0 | 15% HCl | 200 | 16 | CTU | 0.0038 |
| 48 | CI-30 | Alpha Terpene | 2 | 2 | 15% HCl | 200 | 16 | CTU | 0.0016 |
| | | | | | | | | | |
| Comp. Ex. 49 | Poland | None | 4 | 0 | 15% HCl | 180 | 16 | CTU | 0.0027 |
| 50 | Poland | Alpha Terpene | 2 | 2 | 15% HCl | 180 | 16 | CTU | 0.0026 |
| | | | | | | | | | |
| Comp. Ex. 51 | Poland | None | 4 | 0 | 15% HCl | 180 | 16 | CTU | 0.0010 |
| 52 | Poland | Alpha Terpene | 2 | 2 | 15% HCl | 180 | 16 | CTU | 0.0033 |

(continued)

| Example No. | Corrosion Inhibitor | Inhibitor Intensifier | Inhibitor, GPT | Intensifier, GPT | Acid Type, Amount | Temp., °F | Test Times, Hours | Metal Type | Corrosion Rate |
|---|---|---|---|---|---|---|---|---|---|
| | | | | | | | | | |
| Comp. Ex. 53 | QA | None | 4 | 0 | 15% HCl | 180 | 16 | CTU | 0.0473 |
| 54 | QA | Alpha Terpene | 2 | 2 | 15% HCl | 180 | 16 | CTU | 0.0211 |
| | | | | | | | | | |
| Comp. Ex. 55 | CI-11 | None | 4 | 0 | 9:1.5 HCl:HF | 200 | 16 | N-80 | 0.0299 |
| 56 | CI-11 | Alpha Terpene | 2 | 2 | 9:1.5 HCl:HF | 200 | 16 | N-80 | 0.0262 |
| 57 | CI-11 | D'Limonene | 2 | 2 | 9:1.5 HCl:HF | 200 | 16 | N-80 | 0.0306 |
| | | | | | | | | | |
| Comp. Ex. 58 | CI-14 | None | 4 | 0 | 9:1.5 HCl:HF | 200 | 16 | N-80 | 0.0032 |
| 59 | CI-14 | Alpha Terpene | 2 | 2 | 9:1.5 HCl:HF | 200 | 16 | N-80 | 0.0726 |
| 60 | CI-14 | D'Limonene | 2 | 2 | 9:1.5 HCl:HF | 200 | 16 | N-80 | 0.0523 |
| 61 | CI-14 | D'Limonene | 2 | 2 | 9:1 HCl:HF | 200 | 16 | N-80 | 0.0020 |
| | | | | | | | | | |
| Comp. Ex. 62 | CI-25 | None | 4 | 0 | 9:1.5 HCl:HF | 200 | 16 | N-80 | 0.0012 |
| 63 | CI-25 | Alpha Terpene | 2 | 2 | 9:1.5 HCl:HF | 200 | 16 | N-80 | 0.0027 |
| 64 | CI-25 | D'Limonene | 2 | 2 | 9:1.5 HCl:HF | 200 | 16 | N-80 | 0.0207 |
| 65 | CI-25 | D'Limonene | 2 | 2 | 9:1 HCl:HF | 180 | 16 | N-80 | 0.0006 |
| | | | | | | | | | |
| Comp. Ex. 66 | CI-30 | None | 4 | 0 | 9:1.5 HCl:HF | 200 | 16 | N-80 | 0.0023 |
| 67 | CI-30 | Alpha Terpene | 2 | 2 | 9:1.5 HCl:HF | 200 | 16 | N-80 | 0.0019 |
| 68 | CI-30 | D'Limonene | 2 | 2 | 9:1 HCl:HF | 200 | 16 | N-80 | 0.0021 |
| 69 | Poland | None | 4 | 0 | 9:1.5 HCl:HF | 200 | 16 | N-80 | 0.0110 |
| 70 | Poland | Alpha Terpene | 2 | 2 | 9:1.5 HCl:HF | 200 | 16 | N-80 | 0.0232 |
| 71 | Poland | None | 4 | 0 | 9:1.5 HCl:HF | 200 | 16 | N-80 | 0.0121 |

(continued)

| Example No. | Corrosion Inhibitor | Inhibitor Intensifier | Inhibitor, GPT | Intensifier, GPT | Acid Type, Amount | Temp., °F | Test Times, Hours | Metal Type | Corrosion Rate |
|---|---|---|---|---|---|---|---|---|---|
| 72 | Poland | Alpha Terpene | 2 | 2 | 9:1.5 HCl:HF | 200 | 16 | N-80 | 0.0354 |
|  |  |  |  |  |  |  |  |  |  |
| Comp. Ex. 73 | QA | None | 4 | 0 | 9:1.5 HCl:HF | 200 | 16 | N-80 | 0.0365 |
| 74 | QA | Alpha Terpene | 2 | 2 | 9:1.5 HCl:HF | 200 | 16 | N-80 | 0.0156 |
|  |  |  |  |  |  |  |  |  |  |
| Comp. Ex. 75 | CI-11 | None | 4 | 0 | 9:1 HCl:HF | 200 | 16 | CTU | 0.0343 |
| 76 | CI-11 | Alpha Terpene | 2 | 2 | 9:1 HCl:HF | 200 | 16 | CTU | 0.0237 |
| 77 | CI-11 | D'Limonene | 2 | 2 | 9:1 HCl:HF | 200 | 16 | CTU | 0.0288 |
|  |  |  |  |  |  |  |  |  |  |
| Comp. Ex. 78 | CI-14 | None | 4 | 0 | 9:1 HCl:HF | 200 | 16 | CTU | 0.0033 |
| 79 | CI-14 | Alpha Terpene | 2 | 2 | 9:1 HCl:HF | 200 | 16 | CTU | 0.0082 |
| 80 | CI-14 | D'Limonene | 2 | 2 | 9:1 HCl:HF | 200 | 16 | CTU | 0.0033 |
| 81 | CI-14 | D'Limonene | 2 | 2 | 9:1 HCl:HF | 180 | 16 | CTU | 0.0016 |
|  |  |  |  |  |  |  |  |  |  |
| Comp. Ex. 82 | CI-25 | None | 4 | 0 | 9:1 HCl:HF | 200 | 16 | CTU | 0.0036 |
| 83 | CI-25 | Alpha Terpene | 2 | 2 | 9:1 HCl:HF | 200 | 16 | CTU | 0.0040 |
| 84 | CI-25 | D'Limonene | 2 | 2 | 9:1 HCl:HF | 200 | 16 | CTU | 0.0015 |
| 85 | CI-25 | D'Limonene | 2 | 2 | 9:1 HCl:HF | 180 | 16 | CTU | 0.0007 |
|  |  |  |  |  |  |  |  |  |  |
| Comp. Ex. 86 | CI-30 | None | 4 | 0 | 9:1 HCl:HF | 200 | 16 | CTU | 0.0024 |
| 87 | CI-30 | Alpha Terpene | 2 | 2 | 9:1 HCl:HF | 200 | 16 | CTU | 0.0046 |
| 88 | CI-30 | D'Limonene | 2 | 2 | 9:1 HCl:HF | 200 | 16 | CTU | 0.0014 |
| Comp. Ex. 89 | Poland | None | 4 | 0 | 9:1 HCl:HF | 200 | 16 | CTU | 0.0038 |
| 90 | Poland | Alpha Terpene | 2 | 2 | 9:1 HCl:HF | 200 | 16 | CTU | 0.0044 |

EP 1 724 375 A2

(continued)

| Example No. | Corrosion Inhibitor | Inhibitor Intensifier | Inhibitor, GPT | Intensifier, GPT | Acid Type, Amount | Temp., °F | Test Times, Hours | Metal Type | Corrosion Rate |
|---|---|---|---|---|---|---|---|---|---|
|  |  |  |  |  |  |  |  |  |  |
| Comp. Ex. 91 | QA | None | 4 | 0 | 9:1 HCl:HF | 200 | 16 | CTU | 0.0378 |
| 92 | QA | Alpha Terpene | 2 | 2 | 9:1 HCl:HF | 200 | 16 | CTU | 0.0320 |

These Examples illustrate that terpenes function as metal protection intensifiers for various types of acids and in conjunction with different types of commercial corrosion inhibitors. Further, the terpenes are illustrated to at least as good, if not better, than commercially available inhibitor intensifiers.

Examples 93-96.

Corrosion inhibitor formulations were prepared containing Antecor OG as corrosion inhibitor, a terpene and an acid solution of 2 % HF, 13 % acetic acid and 9 % formic acid. A QT-900 coil tubing metal coupon was soaked in the acid solutions at 329° F (165° C) at 3500 psi under agitation for 8 hours. The results are compiled in Table II.

**Table II**

| Example No. | Inhibitor, GPT | Intensifier @GPT | Corrosion Rate, lbs/ft$^2$ | Pitting Number |
|---|---|---|---|---|
| 93 | 20 | Alpha Terpene @ 25 | 0.0109 | Tr. |
| 94 | 15 | Alpha Terpene @ 25 | 0.0135 | 1 |
| 95 | 10 | Alpha Terpene @ 25 | 0.0162 | Tr. |
| 96 | 20 | None | 0.0613 | Tr. |

Examples 97-102.

Corrosion inhibitor formulations were prepared containing Poland as corrosion inhibitor, a terpene and an acid solution of 2 % HF, 13 % acetic acid and 9 % formic acid. The formulations were then pumped over a QT-900 coil tubing metal coupon at 329° F (165° C) at 3500 psi under agitation for 8 hours. The results are compiled in Table III.

**Table III**

| Example No. | Inhibitor, GPT | Intensifier @ GPT | Corrosion Rate, lbs/ft$^2$ | Pitting No. |
|---|---|---|---|---|
| 97 | 20 | None | 0.0311 | Tr. |
| 98 | 40 | None | 0.0311 | Tr. |
| 99 | 60 | None | 0.0311 | Tr. |
| 100 | 20 | 25 | 0.0191 | Tr. |
| 101 | 40 | 25 | 0.0245 | Tr. |
| 102 | 60 | 25 | 0.0247 | Tr. |

Examples 103-108.

Corrosion inhibitor formulations were prepared containing CI-corrosion inhibitor, alpha terpene and an acid solution of 2% HF, 13% acetic acid and 9% formic acid. The formulations were then pumped over a QT-900 coil tubing metal coupon at 329° F (165° C) at 3500 psi under agitation for 8 hours. The results are compiled in Table IV.

**Table IV**

| Example No. | Inhibitor I | Inhibitor I Cone., GPT | Inhibitor II | Inhibitor II Conc., GPT | Intensifier, Cone.., GPT | Corrosion Rate |
|---|---|---|---|---|---|---|
| 103 | C1-11 | 60 | C1-25 | 15 | 25 | 0.0424 |
| 104 | CI-11 | 60 | CI-25 | 15 | 50 | 0.0410 |
| | | | | | | |
| 105 | CI-11 | 35 | CI-25 | 20 | 50 | 0.0538 |
| 106 | CI-11 | 35 | CI-25 | 20 | 100 | 0.0528 |
| | | | | | | |
| 107 | CI-11 | 60 | CI-25 | 25 | 25 | 0.0376 |

(continued)

| Example No. | Inhibitor I | Inhibitor I Cone., GPT | Inhibitor II | Inhibitor II Conc., GPT | Intensifier, Cone.., GPT | Corrosion Rate |
|---|---|---|---|---|---|---|
| 108 | CI-11 | 60 | CI-25 | 25 | 50 | 0.0295 |

These Examples demonstrate that corrosion rate decreases when the concentration of intensifier is increased.

Examples 109-116.

Corrosion inhibitor formulations were prepared containing a mixture of corrosion inhibitors, alpha terpene and an acid solution of 2% HF, 13% acetic acid and 9% formic acid in a monoethanolamine (MEA) buffer. The formulations were then pumped over a QT-900 coil tubing metal coupon at 329° F (165° C) at 3500 psi under agitation for 8 hours. The results are compiled in Table V.

**Table V**

| Example No. | MEA, GPT | Inhibitor I | Inhibitor I Cone., GPT | Inhibitor II | Inhibitor II Conc., GPT | Intensifier | Intensifier, Conc. GPT | Cor. Rate | Pitting No. |
|---|---|---|---|---|---|---|---|---|---|
| 109 | 20 | CI-25 | 40 | CI-11 | 20 | None | 0 | 0.0391 | 1 |
| 110 | 20 | CI-25 | 40 | CI-11 | 20 | Alpha Terpene | 25 | 0.0273 | 1 |
| 111 | 20 | CI-25 | 40 | CI-11 | 20 | Alpha Terpene | 50 | 0.0331 | Tr. |
| 112 | 20 | CI-25 | 50 | CI-11 | 30 | Alpha Terpene | 50 | 0.0249 | Tr. |
| | | | | | | | | | |
| 113 | 13 | CI-25 | 42 | CI-11 | 15 | None | 0 | 0.0395 | 1 |
| 114 | 13 | CI-25 | 42 | CI-11 | 15 | Alpha Terpene | 30 | 0.0320 | 1 |
| | | | | | | | | | |
| 115 | 10 | CI-30 | 45 | CI-11 | 20 | None | 0 | 0.0662 | 1 |
| 116 | 10 | CI-30 | 45 | CI-11 | 20 | Alpha Terpene | 25 | 0.0610 | Tr. |

Comparative Example No. 109 and Example Nos. 110-112 demonstrate that the addition of alpha terpene reduces the corrosion rate at low or trace pitting. Further, Example No. 112 illustrates that an increase in the concentration of corrosion inhibitor has an effect on decreasing the corrosion rate. Comparative Example No. 113 and Example No. 114 demonstrates that the addition of alpha terpene reduces corrosion rate. Comparative Example 115 and Example 116 demonstrates that the addition of alpha terpene reduces corrosion rate and eliminates pitting.

From the foregoing, it will be observed that numerous variations and modifications may be effected without departing from the true spirit and scope of the novel concepts of the invention.

**Claims**

1. A composition for inhibiting or reducing the corrosion of metals comprising:

    (A.) an acid;
    (B. a corrosion inhibitor; and
    (C.) a corrosion inhibitor intensifier comprising a terpene or a derivative thereof.

2. The composition of Claim 1, wherein the amount of corrosion inhibitor intensifier in the composition is between from about 1 to about 10 % by volume.

3. The composition of Claim 1, wherein the acid comprises at least one mineral acid or organic acid.

4. The composition of Claim 3, wherein the mineral acid is hydrochloric acid, hydrofluoric acid, nitric acid, phosphoric acid or sulfuric acid.

5. The composition of Claim 3, wherein the organic acid is at least one acid selected from the group consisting of acetic acid, formic acid, citric acid, phosphonic acid and an aminopolycarboxylic acid and salts thereof.

6. The composition of Claim 1, wherein the terpene is selected from at least one member selected from the group consisting of a hydrocarbon, alcohol, aldehyde and ketone.

7. The composition of Claim 6, wherein the terpene is either monocyclic or bicyclic.

8. The composition of Claim 1, wherein the terpene is a monoterpene, sesquiterpene, diterpene, triterpene or tetraterpene.

9. The composition of Claim 8, wherein the terpene is at least one member selected from the group consisting of carotene, limonene, pinene, farnesene, camphor and menthol.

10. The composition of Claim 9, wherein the terpene is alpha-pinene.

11. A method of reducing corrosive effects on metal during well stimulation by introducing into the well the composition of Claim 1.

12. The method of Claim 11, wherein the terpene is at least one member selected from the group consisting of a hydrocarbon, alcohol, aldehyde and ketone.

13. The method of Claim 12, wherein the terpene is monocyclic or bicyclic.

14. The method of Claim 12, wherein the terpene is a monoterpene, sesquiterpene, diterpene, triterpene or tetraterpene.

15. The method of Claim 11, wherein the terpene is at least one member selected from the group consisting of carotene, limonene, pinene, farnesene, camphor and menthol.

16. The method of Claim 15, wherein the terpene is alpha-pinene.

17. The method of Claim 11, wherein the volume ratio of corrosion inhibitor intensifier to corrosion inhibitor introduced into the well is from about 10:90 to about 90:10.

18. A method of acidizing a subterranean formation penetrated by a wellbore with an aqueous acid solution whereby the corrosive effect of the acid solution on metal contacted thereby is minimized by the addition of at least one corrosion inhibitor and at least one corrosion inhibitor intensifier comprising a terpene or a derivative thereof.

19. The method of Claim 18, wherein the corrosion inhibitor intensifier is combined with the aqueous organic acid solution in an amount in the range of from about 1% to about 10% by volume of the aqueous organic acid solution.

20. The method of Claim 17, wherein the terpene is at least one member selected from the group consisting of a hydrocarbon, alcohol, aldehyde or ketone and is monocyclic or bicyclic.

21. The method of Claim 20, wherein the volume ratio of corrosion inhibitor intensifier to corrosion inhibitor introduced into the well is from about 10:90 to about 90:10.

22. A method of contacting and reacting acid soluble materials with an aqueous organic acid solution whereby the corrosive effect of the acid solution on metal also contacted thereby is minimized comprising the steps of combining a corrosion inhibitor and a terpene, as corrosion inhibitor intensifier, with the aqueous organic acid solution.

23. The method of Claim 22, wherein the corrosion inhibitor intensifier is combined with the aqueous organic acid solution in an amount in the range of from about 1% to about 10 % by volume of the aqueous organic acid solution.

24. The method of Claim 22, wherein the terpene is at least one member selected from the group consisting of carotene, limonene, pinene, farnesene, camphor and menthol.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5543388 A